# EUROPEAN PATENT SPECIFICATION

(11) **EP 1 791 442 B1**
(45) Date of publication and mention of the grant of the patent: **24.02.2010**
(21) Application number: 05815841.1
(22) Date of filing: 01.08.2005
(51) Int. Cl.: A23L 1/236

(54) **REDUCED CALORIE SWEETENER COMPOSITION**
SÜSSSTOFFZUSAMMENSETZUNG MIT REDUZIERTEM KALORIENGEHALT
COMPOSITION EDULCORANTE POSSEDANT UNE TENEUR CALORIQUE REDUITE

(30) Priority: 30.07.2004 IN MU08122004
(43) Date of publication of application: 06.06.2007
(73) Proprietor: V.B. MEDICARE PVT. LTD., Bangalore 560 048 KRN (IN)
(72) Inventor: RATNAM, Rakesh c/o Pharmed Medicare Private Ltd., Mumbai, Maharashtra, 400 001 (IN); AURORA, Suneet c/o Pharmed Medicare Private Ltd., Mumbai, Maharashtra, 400 001 (IN); ZANNONI, Joseph, M., Hamilton, NJ 08620 (US)
(74) Representative: Kuhnen, Rainer-Andreas
(86) International application number: PCT/IN2005/000253
(87) International publication number: WO 2006/027796

(56) References cited:
- EP-A- 0 313 234
- EP-B1- 0 334 617
- WO-A-01/06872
- WO-A-01/10236
- WO-A-01/28357
- WO-A-98/04156
- US-A- 5 380 541
- US-A1- 2001 002 271

## Description

### TECHNICAL FIELD

The invention relates to novel reduced calorie sweetener compositions in the field of high intensity sweeteners.

### BACKGROUND OF THE INVENION

In recent years, the food industry has focused on value-added products that address to balancing health concerns with functional requirements of food such as taste. High intensity sweeteners as low calorie sweetener substitute to sucrose and other conventional low sweetness high calorie sweeteners is one such area which aims at providing the desired level of sweetness at reduced level of calories.

For the purpose of this document, "Low Calorie Sweetener" includes all the conventional sweeteners which have sweetness intensity, relative to same weight of sucrose, being either lesser, equal or more by a factor of a few times but not more than by a factor of ten times than sucrose. "High intensity Sweeteners" include all sweeteners which have sweetness intensity relative to same weight of sucrose by a factor of more than 10.

Obesity and weight control have become major concerns in the category of life-style related problems. Recently the WHO/FAO recommended that no more than 10% of energy requirements of the body should be met from simple sugars. Diets having low glycaemic index has become a matter of necessity.

For practical handling the high intensity sweeteners are transformed into sweetener compositions containing one or more additives with an objective of achieving more convenience for handling and use.

However, when high intensity sweeteners are used as the only source of sweetness in preparation of oral compositions or recipes, ingestible or non-ingestible, such as sweet eatable preparations, food recipes, beverages, pharmaceutical compositions, toothpastes, chewing gums etc., although they do bring in the health benefits as well as sweetness, the taste and organoleptic feel with respect to many subtle features such as physical consistency, texture (such as dryness, moistness, brittleness etc.), flavour, aftertaste etc. are seen to be not equally same as that are available when sucrose or other conventional high calorie sweetener is used at same degree of relative sweetness.

The lack of same organoleptic feel arises on account of several problems such as bitter, metallic or otherwise unpleasant aftertaste etc. associated with use of high intensity sweeteners. As a result, the food preparations in which they are used are not as agreeable to taste as they are when sweetening agent is conventional high calorie sweetener alone, such as sucrose.

This problem is further aggravated by the fact that high intensity sweeteners contribute only to sweetness and not to many other food properties which are contributed by conventional sweeteners, which are high calorie sweeteners, including sucrose. Such food properties are derived from their chemical molecular structure and also a result of reactions and interactions they undergo while baking, cooking etc. Such properties are not available from the high intensity sweeteners as they lack those peculiar molecular characteristics and properties. Hence, while high intensity sweeteners are a logical alternative choice to augment sweetness despite reduction in the use of sucrose for the purpose of reducing calories or sugar intake in the diet, doing so without losing sucrose/sugar-specific taste properties is a big challenge. The effect of presence of adverse and/or lack of some desired organoleptic properties of the low calorie, high intensity sweeteners needs to be remedied to as much extent as possible. Preserving the sweetness, flavour, texture and similar subtle organoleptic properties of a product traditionally considered as a treat, presents a challenge to any individual or a manufacturer who desires to offer it in a sugar-free form for individual or commercial production purpose of that product / receipe.

A good bulk sweetener needs the following characteristics:
a) High sweetness and a taste close to that of sucrose
b) Low cooling effect
c) High solubility
d) High melting point
e) Low hygroscopicity
f) High crystallinity
g) Low water content
h) Low specific surface area

It has been proposed to prepare high intensity sweetener compositions capable to impart to the oral preparations to which they are added with improved organoleptic properties. This shall remove a major hurdle in the acceptance of high intensity sweeteners by the consumers.

The principle objective of the invention is to evolve an easy to use sweetener composition which provides practically very close organoleptic properties as are provided when plain sucrose is added to a recipe.

Another objective of the invention is to develop forms of the composition which shall give convenience in use to the consumers and provide a composition in such form which is amenable to be transformed into various consumer friendly forms and packings.

A further objective is that the composition must also be amenable to be easily refined, conched, tempered and stored, easy to formulate and having nutritional benefits.

Beyts et al (1995) in US 5,380,541, (EP0313234 A1) have reported that synergy is obtained in sweetness and saving in the use of high intensity sweeteners is possible up to varying extents when sucralose is used with a sweet saccharide selected from fructose; glucose; maltose and other gluco-oligosaccharides; fructose mixed with glucose and/or gluco-oligosaccharides; lactose; isomaltulose; and sugar alcohols.when the relative quantities of sucralose (Trichlorogalactosucrose) and the sweet saccharide being such as to provide a relative sweetness contribution of from 5:1 to 1:5. This work does not address to organoleptic properties other than sweetness. This work also excludes sucrose from its ambit, as no synergy has been seen between sucralose and sucrose.

Goodacre, Brita Christina (1994), in EP0334617B1 have described hollow spheroids or part spheroids of microcrystalline sucrose preferably conaining or or more of high intensity sweeteners such as sucralose. This patent application disclaims the use of hollow spheroids or part spheroids of microcrystalline sucrose. Nevertheless, here also, the issue of sugar organoleptic properties has not been addressed to.

After disclaiming the hollow spheroids and part spheroids of microcrystalline sucrose, no compositions are known which are based on Trichlorogalactosucrose low intensity sweetener containing at least sucrose.

### SUMMARY OF THE INVENTION

It was found surprisingly, that instead of total elimination of sucrose from sweetening compositions based on high intensity sweeteners, incorporation of some small quantity of sucrose in such compositions had a very desirable effect in ensuring augmentation of exclusive sucrose specific organoleptic properties in the final preparations. Taste characteristics of such compositions were almost as good as that of sucrose even at actually substantially reduced level of sucrose use. This reduced quantity of sucrose has been surprisingly seen to help to augment the overall taste properties associated with full quantity of sucrose use, and yet the calorie reduction aim keeping sweetness same is successfully achieved.

The high intensity sweetener compositions prepared according to this invention shall include besides sucrose, excluding hollow spheroids or part spheroids of microcrystalline sucrose, even other sugars capable of imparting their own exclusive properties to the food and such compositions shall combine into a single product, several properties such as desired degree of sweetness, low calorific value, low glicaemic index, organoleptic and functional properties specific to sugar molecules such as caramelizing effect in baking or similar properties specific to sugar molecule and make many innovative applications possible which are not otherwise possible in present state of art from high intensity sweetener compositions that do not contain sugar.

It was also found that favourable organoleptic properties are also available from use of small amounts of non-sugar low calorie low intensity sweeteners, which themselves have very low glycemic index, including but not limited to, erythritol, lactitol, maltitol, mannitol, sorbitol, xylitol, polyglucitol, Trehalose, oligosaccharides, isomalt, oligofructose, cellobiose as they contribute to organoleptic properties even in very low concentrations. They may either be used in alternative for sugars or in addition to sugars.

Such sweeteners compositions can be applied to several applications such as foods, beverages, pharmaceutical preparations or dosage forms etc.

Such compositions can also be prepared in several forms such as powder, tablet, granules, capsules, liquid etc. and may be packed in several types of convenient packing such as sachets, sachet sticks, sticks, cubes, as pastes in tubes etc. for convenient storage, handling and convenience in dispensing and use. Such compositions may also be prepared in several dosage forms which make it convenient to select an equivalence of desired volume of sugar, such as one teaspoonfull, or one cup full etc.

The amounts in which such addition of low intensity sweeteners, sugar as well as non-sugar, excluding hollow spheroids or part spheroids of microcrystalline sucrose, that will be required is very small. Total sweetness contribution by the low intensity sweeteners in the composition of this invention, relative to total sweetness of the composition itself, shall not exceed 15%.

The detailed description and the specific examples given in a subsequent section, for the purpose of indicating specific embodiments of the invention, serve the purpose of illustration.

### BRIEF DESCRIPTIONS OF DRAWING AND SHORTFORMS

Prep 1: Stands for Preparation 1 : A coffee preparation described below in Example 1 containing sucrose as sweetener
Prep 2: Stands for Preparation 2 : A coffee preparation described below in Example 1 containing sweetener mix of this invention as sweetener
Prep 3: Stands for Preparation 3 : A coffee preparation described below in Example 1 containing Trichlorogalactosucrose (TGS) as sweetener
Prep 4: Stands for Preparation 4 : A coffee preparation described below in Example 1 containing maltitol as sweetener

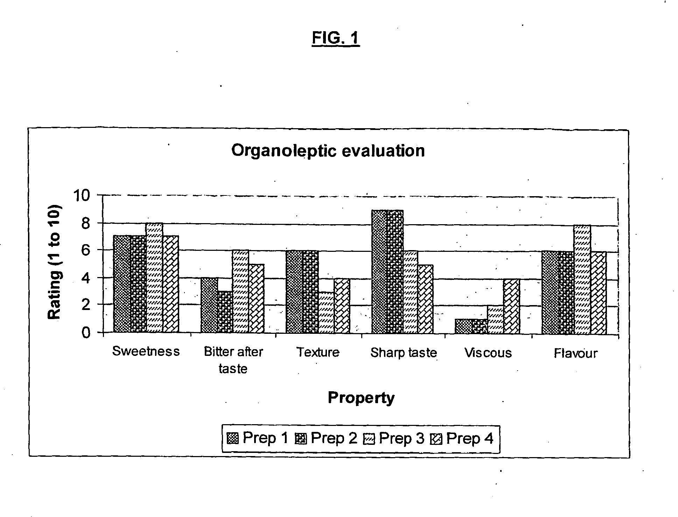

Fig 1, illustrates results of comparative organoleptic evaluation of preparations using sweetener composition of this invention with sucrose, TGS and maltitol.

### DETAILED DESCRIPTION OF THE INVENTION

Present invention is not limited to the particular methodologies, protocols, solvents, and reagents, examples etc, that are described herein as tools to achieve the claimed objective, as these may vary with change in context. Further, the terminology used herein is used for the purpose of describing particular embodiments only, and is not intended to and shall not limit the scope of the present invention.

As used herein and in the appended claims, the singular forms "a" "an" and "the" include plural reference also unless the context clearly indicates or requires or means otherwise. Thus, for example, a reference to "a process" is a reference to one or more processes for the stipulated objective and includes equivalents thereof known or obvious to those skilled in the art and so forth. Unless defined otherwise or contrary to the context, all technical and scientific terms used herein have the same meanings as commonly understood by one of ordinary skill in the art to which this invention belongs. Several methods, devices, and materials are described herein, although in practice or for testing of present invention, any methods and materials similar or equivalent to those described herein can be used. All documents cited herein are to be construed as included herein in their entirety by way of reference.

The said sweetener compositions have several new useful novel applications in the field of sweetening of consumer products meant for eating such as foodstuffs, beverages; or taken in stomach through oral route for treatment such as in pharmaceutically administered formulations; or for products which are not eaten but are taken inside mouth and buccal cavity for purpose of their use such as mouth wash, toothpastes, chewing gum etc.; or also used in any sweetening and cooking or baking applications along with conventional liquid or solid excipients in sweetening compositions.

Utility of such novel sugar compositions shall be synergistically enhanced by transforming them or packing them into user-friendly packaging or dosage forms for a small user as well as industrial users either portion defined or portion undefined.

This includes any solid form including but not limited to a tablet dosage form capsule dosage form, effervescent tablet dosage form and or liquid and or another other predetermined defined dosage form which includes sugar, with or without another sweetener and or with or without another ingredients and or TGS or any other sweetener in combination with any other sweetener or sweeteners with or without any other ingredients

Further, the form in which the compositions are provided in the market should be easy to use. They should give clear idea of how much to use for augmenting sweetness of known quantity of sucrose, such as one teaspoonful, or one cup-full etc. It would be ideal if they can be given in same volume as sugar with same sweetness intensity as the same volume of sucrose for preparation of various foods, beverages and pharmaceutical compositions, and when used in such preparations, would give the required degree of sweetness at reduced calories and yet also give the peculiar "sucrose" taste profile and organoleptic properties in all the senses such as flavour, after taste, storage properties, etc.

For solid sweetener systems and compositions convenient ranges of packets, sugar cubes, sachets, stick sachets in conventional and novel packaging materials in novel shapes, sizes and appearance are possible to provide for better utilization of shelf space in a retail outlet or home or office or restaurant or cafeteria, easier to tear and pour into a cup requiring sweetness and easier to measure a reduced dosage amount of sweetness to be added these products may or may not have a timed release or modified release of active ingredient and or sweetness associated with it.

For liquid sweetener systems and compositions convenient ranges of fluid, semi-fluid, paste and cream forms, appropriate packing using appropriate packing material in any shape or form shall be invented which is convenient to carry or dispense or store or transport any combination containing any of the above sweetener products or combination of product produced above.

A liquid concentrate of sugar with TGS or liquid TGS and a liquid concentrate with or without the addition of other ingredients or sweeteners will enable easily augmenting the equivalence of the sweetness of one teaspoon of sugar equivalence by choosing to take only 1/2 or 1 or 2 drops of such liquid or some intermediate quantity required. A ready solubilized form of such a product may be easier to administer in certain applications and for arthritic people who find it easier to squeeze a bottle or tear open a sachet packet or stick sachet packet.

A sweetener mix composition has been described below as illustrative one, and a person skilled in the art shall easily visualize several other modifications of the illustrated composition within the scope of this patent, suitable to address the need, scope and the purpose for which the sweetener composition is desired be used,

Such a composition may contain one or more high intensity sweeteners, a diluant / filler and small quantity of sucrose. Choice of more than one high intensity sweeteners offers additional advantage of masking of certain undesirable aftertaste which is generated when used as single individual components.

The following properties were studied during the comparison of the sweetener mix containing small quantity of sucrose with sugar alone:
a) Sweetness and flavour
b) After taste and odour
c) Nutritional benefits

Such compositions may be solid, semi-solid, colloidal preparation, a paste as well as liquid in the form and may contain adjuvants, excipients, buffers and preservatives as per the need of the composition and proposed application.

### Example 1:

The following composition is developed and proposed for use in food commodities such as beverage, chewing gums, etc. and compared with that of preparations using plain sucrose with same sweetness intensity.

A formulated dry sweetener product made with Trichlorogalactosucrose (TGS) which is 1', 6'-Dichloro-1', 6'- Dideoxy-â-D-Fructo-Furanosyl-4-Chloro-4-Deoxy-á-D-Galactopyranoside (also widely known as sucralose), Acesulphame K and Neotame, Tapioca starch, maltodextrin, citric acid and flow agents was produced by first mixing the following components in a Hobart mixer.

| **Particulars** | **Qty (g)** |
|---|---|
| TGS | 5.52 |
| Acesulphame K | 3.68 |
| Neotame | 0.003 |
| Starch emulsifier | 14.7 |
| Sucrose | 14.7 |
| Maltodextrin (Diluent) | 738 |
| Citric acid (Diluent) | 738 |

Then, 1520 grams of water was slowly added for about 1 hour until the mix was slightly damp The material was then removed and dried overnight (16 hours) at 170.degree. F and ground.

The sweeteners according to their organoleptic properties (desirable and undesirable properties were studied) were mixed in varied proportions with sucrose. The sucrose quantity was evaluated by testing the overall organoleptic property of the preparation. The agglomerated product is then filled in sachets for ready to use in Coffee and tea preparations as a substitute for sugar.

The starch component in the formulation is derived from tapioca that has been designed for use in broad range of products. This starch gives clean flavor release and has been designed to tolerate harsh processing and long-term storage conditions. The product helps in use under cold, warm and hot applications are fully functional in liquids of various viscosities and soluble solids level.

Following is the use of the Composition A prepared as above in the preparation of instant coffee. Also the comparison with other sweetener preparations is discussed.

### Preparation 1

| **Particulars** | **Qty (g) / cup** |
|---|---|
| Sucrose | 5.00 |
| Instant Coffee | 0.99 |
| Non-dairy Creamer | 3.97 |
| Vanilla Flavor | 0.08 |
| Water | 72.86 |

### Preparation 2

| **Particulars** | **Qty (g) / cup** |
|---|---|
| Sweetener mix sachet | 2.04 |
| Instant Coffee | 0.99 |
| Non-dairy Creamer | 3.97 |
| Vanilla Flavor | 0.08 |
| Water | 72.86 |

### Preparation 3

| **Particulars** | **Qty (g) / cup** |
|---|---|
| Trichlorogalactosucrose | 0.007 |
| Instant Coffee | 0.99 |
| Non-dairy Creamer | 3.97 |
| Vanilla Flavor | 0.08 |
| Water | 72.86 |

### Preparation 4

| **Particulars** | **Qty (g) / cup** |
|---|---|
| Maltitol | 5.00 |
| Instant Coffee | 0.99 |
| Non-dairy Creamer | 3.97 |
| Vanilla Flavor | 0.08 |
| Water | 72.86 |

The preparations were tested for organoleptic properties .. A panel of 5 experts evaluated the preparations and the properties were rated in the scale of ten as given below.

| **Property** | **Prep 1** | **Prep 2** | **Prep 3** | **Prep 4** |
|---|---|---|---|---|
| Sweetness | 7 | 7 | 8 | 7 |
| Bitter after taste | 4 | 3 | 6 | 5 |
| Texture | 6 | 6 | 3 | 4 |
| Taste sharpness | 9 | 9 | 6 | 5 |
| Viscous | 0 | 1 | 1 | 4 |
| Flavour | 6 | 6 | 8 | 6 |

The overall organoleptic evaluation concludes that Preparation 2 using the formulated sweetener mix matches by and large with that of Preparation 1 (sucrose).

### Example 2

The sweetener composition of Example 1 was used for production of analgesic tablet formulation containing the following ingredients :

| **Ingredients** | **Composition (g)** |
|---|---|
| Sweetener composition | 2.04 |
| Mannitol | 3.7 |
| Corn starch | 1.8 |
| Coated Acetaminophen (93%) | 0.4 |
| Citric acid anhydrous | 0.4 |
| Taste masker | 0.4 |
| Sodium bicarbonate | 0.4 |
| Magnesium Trisilicate | 0.11 |
| Magnesium stearate | 0.04 |
| Flavours | 1.8 |

The tablet blend had a high rate of flow and chewable tablets were compressed at a weight of 1950 mg on 3/4" standard concave punches at a satisfactory sustained rate of speed. The ejected tablets had a hardness of 4-5 kP and a friability value of less than 1%.

When placed in the mouth and chewed, the tablets were satisfactorily liquescent (i.e., dissolved/disintegrated and swallowed within 20 seconds). The sweetener combination provided a very good sweet taste and flavours typical of sucrose without any after taste. Storage stability was studied for a period of 4 months at 37.degree. C., the tablets evidenced satisfactory stability with respect to liquescense rate, effervescence rate, active ingredient content, sodium bicarbonate content, sweetener content, color, flavor and hardness.

Numerous modifications and alternative embodiments of the invention will be apparent to those skilled in the art in view of the foregoing description.

## Claims

1. A composition of sweeteners which comprises :
a. Trichlorogalactosucrose added in an amount to provide a relative sweetness contribution of more than 5:1 when compared to sweetness contribution of sucrose in the composition, and
b. low intensity sweetener, containing at least sucrose, excluding hollow spheroids or part spheroids of microcrystalline sucrose, added in an amount to provide a relative sweetness contribution of less than 1:5 when compared to the sweetness contribution of trichlorogalactosucrose in the composition,
c. optionally containing a solid or liquid filler to provide a bulk, and
d. optionally containing excipients, buffers and preservatives as desired or needed.

2. A composition of claim 1 wherein the said filler includes one or more of maltodextrin, dextrin, isomalt, soluble starch, poly dextrose, corn syrup and solids, inulin and water.

3. A composition of claim 1 wherein the said excipients, buffers, preservatives include one or more of sodium benzoate, potassium sorbate, calcium ascorbate, magnesium ascorbate, maltodextrin, polydextrose, isomalt, parabens, ascorbic acid, carotenoids, calcium, manganese, magnesium and zinc salts of citric acid, functional hydrocolloids including carageenan, xanthan gum, etc., carboxy methyl cellulose, colouring agents, flavour enhancing agents, flowing agents.

4. A method of sweetening ingestible products comprising :
a. Foods
b. Beverages including fruit juices
c. oral compositions such as tooth pasts and chewing gum
d. Pharmaceutical compositions,
by using the composition of claim 1.

## Patentansprüche

1. Süßungsmittel-Zusammensetzung, die folgendes umfasst:
a. Trichlorgalctosaccharose, die in einer Menge zugegeben wurde, um einen relativen Beitrag an Süße von mehr als 5:1 im Vergleich zu dem Beitrag an Süße von Saccharose in der Zusammensetzung bereitzustellen, und
b. ein Süßungsmittel geringer Intensität, das wenigstens Saccharose enthält, das hohle Rotationsellipsoide oder Teil-Rotationsellipsoide von mikrokristalliner Saccharose ausschließt, welches in einer Menge zugegeben wird, um einen relativen Beitrag an Süße von weniger als 1:5 im Vergleich zu dem Beitrag an Süße der Trichlorgalactosaccharose in der Zusammensetzung bereitzustellen,
c. optional einen festen oder flüssigen Füllstoff enthaltend, um Masse bereitzustellen, und
d. optional Hilfsstoffe, Puffer und Konservierungsmittel enthaltend, wenn erwünscht oder erforderlich.

2. Zusammensetzung nach Anspruch 1, wobei der Füllstoff eines oder mehrere von Maltodextrin, Dextrin, Isomalt, lösliche Stärke, Polydextrose, Maissirup und Feststoffe, Inulin und Wasser enthält.

3. Zusammensetzung nach Anspruch 1, wobei die Hilfsstoffe, Puffer und Konservierungsmittel eines oder mehrere von Natriumbenzoat, Kaliumsorbat, Calciumascorbat, Magnesiumascorbat, Maltodextrin, Polydextrose, Isomalt, Parabene, Ascorbinsäure, Carotinoide, Calcium, Mangan, Magnesium- und Zinksalze der Zitronensäure, funktionelle Hydrocolloide, einschließlich Carageenan, Xanthangummi, etc., Carboxymethylcellulose, Farbstoffe, Geschmacksverstärker und Flussmittel einschließen.

4. Verfahren zum Süßen von einnehmbaren Produkten, umfassend:
a. Nahrungsmittel,
b. Getränke, einschließlich Fruchtsäfte,
c. orale Zusammensetzungen, wie Zahnpasten und Kaugummi,
d. pharmazeutische Zusammensetzungen,
durch Verwenden der Zusammensetzung nach Anspruch 1.

## Revendications

1. Composition d'édulcorants qui comprend :
a. un trichlorogalactosucrose ajouté en une quantité destinée à fournir une contribution relative à la sucrosité supérieure à 5/1 comparée à la contribution à la sucrosité du sucrose dans la composition, et
b. un édulcorant de faible intensité contenant au moins du sucrose, à l'exclusion de sphéroïdes creux ou de sphéroïdes partiels de sucrose microcristallin, ajouté en une quantité destinée à fournir une contribution relative à la sucrosité inférieure à 1/5 comparée à la contribution à la sucrosité du trichlorogalactosucrose dans la composition,
c. facultativement une charge solide ou liquide pour fournir un volume, et
d. facultativement des excipients, des tampons et des conservateurs, au besoin ou si souhaité.

2. Composition selon la revendication 1, dans laquelle ladite charge comprend un ou plus de la maltodextrine, de la dextrine, de l'isomalt, de l'amidon soluble, du poly dextrose, du sirop de glucose et ses matières déshydratés, de l'inuline et de l'eau.

3. Composition selon la revendication 1, dans laquelle lesdits excipients, tampons, conservateurs comprennent un ou plusieurs du benzoate de sodium, du sorbate de potassium, de l'ascorbate de calcium, de l'ascorbate de magnésium, de la maltodextrine, du polydextrose, de l'isomalt, des parabènes, de l'acide ascorbique, des caroténoïdes, du calcium, du manganèse, des sels de magnésium et de zinc de l'acide citrique, d'hydrocolloïdes fonctionnels comprenant la carragénine, de la gomme de xanthane, etc., de la carboxyméthyl cellulose, d'agents colorants, d'exhausteurs de goût, d'agents d'écoulement.

4. Procédé d'édulcoration de produits ingérables comprenant :
a. des aliments
b. des boissons y compris du jus de fruit
c. des compositions orales telles que des dentifrices et des chewing-gums
d. des compositions pharmaceutiques,
en utilisant la composition selon la revendication 1.
